# EUROPÄISCHE PATENTSCHRIFT

(11) **EP 1 166 546 B1**
(45) Veröffentlichungstag und Bekanntmachung des Hinweises auf die Patenterteilung: **21.05.2003**
(21) Anmeldenummer: 00926665.1
(22) Anmeldetag: 07.03.2000
(51) Int. Cl.: H04N 1/028, H04N 1/00

(54) **VORRICHTUNG ZUR VORLAGENABTASTUNG**
DOCUMENT SCANNER
DISPOSITIF POUR LE BALAYAGE DE DOCUMENTS

(30) Priorität: 20.03.1999 DE 19912691
(43) Veröffentlichungstag der Anmeldung: 02.01.2002
(73) Patentinhaber: Heidelberger Druckmaschinen Aktiengesellschaft, 69115 Heidelberg (DE)
(72) Erfinder: REBETGE, Lutz, D-24146 Kiel (DE)
(86) Internationale Anmeldenummer: DE0000713
(87) Internationale Veröffentlichungsnummer: WO00057628

(56) Entgegenhaltungen:
- EP-A- 0 516 092
- GB-A- 2 323 732
- US-A- 4 989 099

## Beschreibung

Die Erfindung bezieht sich auf das Gebiet der elektronischen Reproduktionstechnik und betrifft eine Vorrichtung zur punkt- und zeilenweisen optoelektronischen Abtastung von Vorlagen, nachfolgend Scanner genannt.

In einem Scanner, der beispielsweise als Flachbettscanner für Durchlichtabtastung ausgebildet ist, befindet sich die abzutastende transparente Vorlage auf einem ortsfesten, transparenten und ebenen Vorlagenträger. Die Vorlage wird von einer Beleuchtungseinheit zeilenweise beleuchtet. Auf der von der Beleuchtungseinheit abgewandten Seite des Vorlagenträgers ist ein Abtastorgan mit einem optoelektronischen Wandler, beispielsweise in Form einer Fotodiodenzeile, angeordnet. Das durch die Helligkeitswerte der abgetasteten Bildpunkte modulierte Abtastlicht wird in dem optoelektronische Wandler des Abtastorgans in elektrisches Bildsignalwerte umgesetzt.

Zur flächenhaften Abtastung der Vorlage bewegen sich Beleuchtungseinheit und Abtastorgan synchron mittels eines geeigneten Vorschubantriebes senkrecht zur Richtung der Abtastzeilen über die Vorlage.

Es sind bereits Flachbettscanner bekannt, bei denen die Beleuchtungseinheit und das Abtastorgan separat geführt und von jeweils einem Vorschubantrieb bewegt werden. Die synchrone Bewegung von Beleuchtungseinheit und Abtastorgan wird durch eine entsprechende Steuerung der beiden Vorschubantriebe erreicht. Diese Ausführungsform ist durch die separaten mechanischen Führungen für Beleuchtungseinheit und Abtastorgan sowie durch den steuerungstechnischen Aufwand relativ aufwendig.

Aus der GB-A-23 23 732 ist bereits ein gattungsgleicher Flachbettscanner bekannt, bei dem eine oberhalb eines Vorlagenträgers angeordnete Beleuchtungseinheit und ein unterhalb des Vorlagenträgers angeordnetes Abtastorgan über ein starres Verbindungselement miteinander gekoppelt sind und durch einen gemeinsamen Antrieb in Vorschubrichtung bewegt werden. Die Beleuchtungseinheit ist parallel zum Vorlagenträger an den Rand des Vorlagenträgers verschwenkbar und dort bei Transport arretierbar.

In der EP-A- 0 516 092 wird ein Flachbettscanner angegeben, bei dem Beleuchtungseinheit und Abtastorgan ebenfalls über ein Verbindungselement mechanisch gekoppelt sind und gemeinsam in Vorschubrichtung angetrieben werden. Bei diesem Flachbettscanner ist die Beleuchtungseinheit von oben in das Verbindungselement steckbar.

Aus der US-A-5 218 485 ist ein ähnlicher Flachbettscanner bekannt.

Aufgabe der vorliegenden Erfindung ist es, eine Vorrichtung zur punkt- und zeilenweisen optoelektronischen Abtastung von Vorlagen derart auszubilden, daß bei einfachem gerätetechnischen Aufwand sowohl eine synchrone Bewegung von Beleuchtungseinheit und Abtastorgan als auch eine hohe Bedienungsfreundlichkeit gewährleistet ist.

Diese Aufgabe wird durch die im Anspruch 1 angegebenen Merkmale gelöst.

Vorteilhafte Weiterbildungen und Ausgestaltungen sind in den Unteransprüchen angegeben.

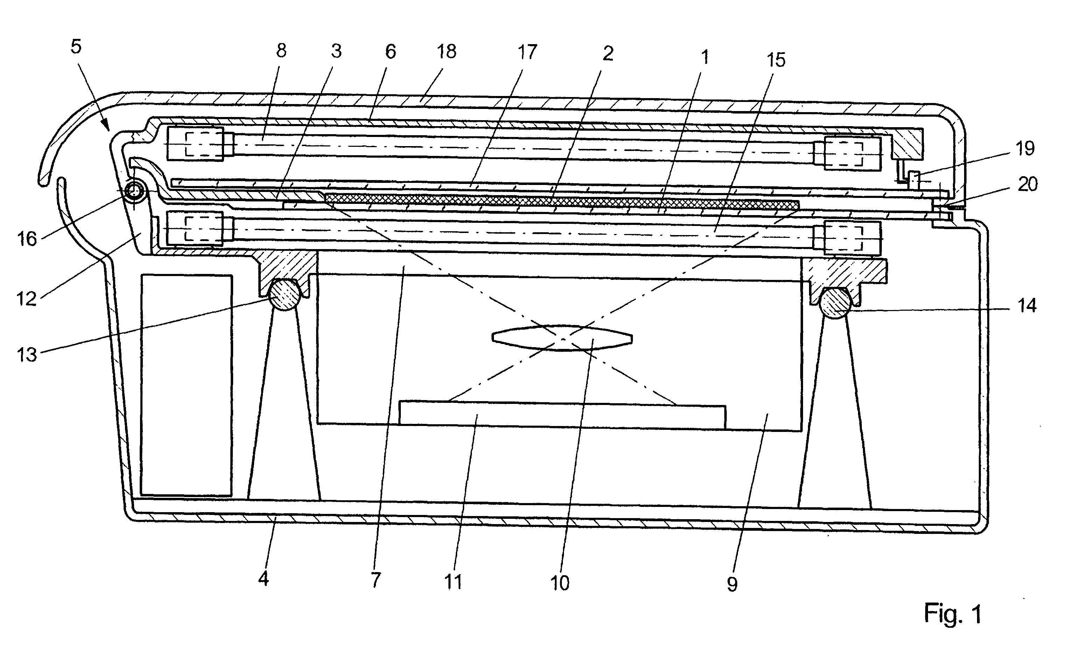

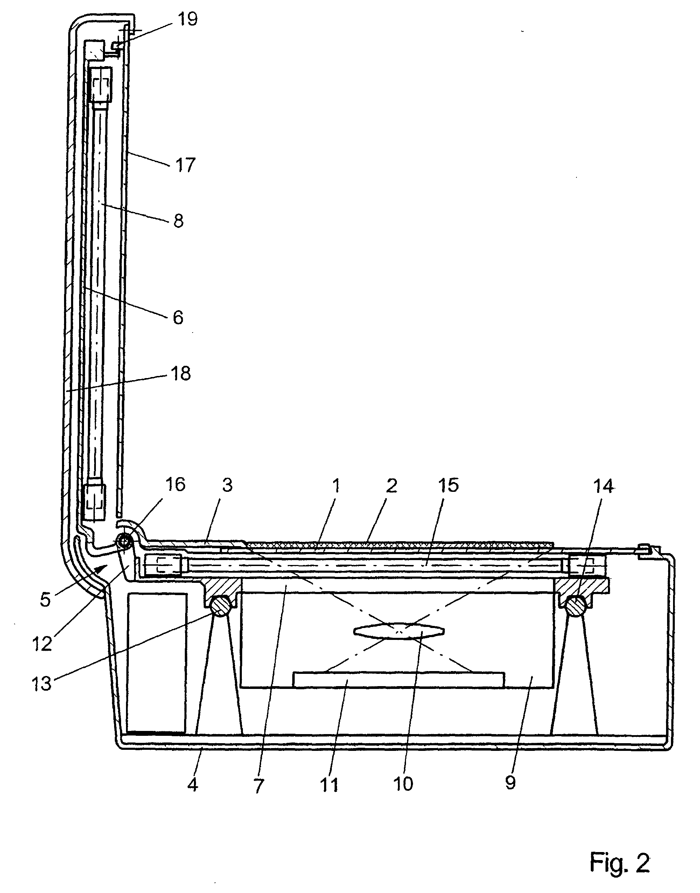

Die Erfindung wird nachfolgend anhand der Fig. 1 und 2 näher erläutert.

Es zeigen:
Fig. 1 einen Flachbettscanners im Querschnitt und
Fig. 2 eine weitere Darstellung des Flachbettscanners im Querschnitt.

Fig. 1 zeigt ein Ausführungsbeispiel für einen Flachbettscanner im Querschnitt. Auf einer ortsfesten transparenten Vorlagenträger (1) befindet sich eine abzutastende Vorlage (2), beispielsweise eine Durchsichtsvorlage. Der Vorlagenträger (1) ist mittels einer Halterung (3) an einem Gehäuses (4) des Flachbettscanners befestigt. Ein Abtastwagen (5) weist einen oberhalb der Vorlage (2) angeordneten Beleuchtungsträger (6) und einen unterhalb der Vorlage (2) angeordneten Grundträger (7) auf. An dem Beleuchtungsträger (6) ist eine Durchlicht-Beleuchtungseinheit (8) beispielsweise in Form einer Leuchtstoffröhre zur zeilenweisen Beleuchtung der Vorlage (2) befestigt. An dem Grundträger (7) ist ein Abtastorgan (9) angebracht. Das Abtastorgan (9) weist ein Abtastobjektiv (10) und einen optoelektronischen Wandler (11) auf, der beispielsweise als in Richtung der Abtastzeilen ausgerichtete Fotodiodenzeile ausgebildet ist. Der Grundträger (7) ist derart gestaltet, daß das von der Vorlage (2) kommende Abtastlicht ungehindert durch das Abtastobjektiv (10) auf den optoelektronischen Wandler (11) fallen kann, in dem die durch die Helligkeitswerte der abgetasteten Bildpunkte modulierte Abtastlicht in elektrisches Bildsignalwerte umgesetzt werden.

Der Beleuchtungsträger (6) und der Grundträger (7) sind miteinander über ein Verbindungselement (12) verbunden, das sich u-förmig um die eine Seite des Vorlagenträgers (1) erstreckt. Zur flächenhaften Abtastung der Vorlage (2) führt der Abtast-wagen (5) mit Durchlicht-Beleuchtungseinheit (8) und Abtastorgan (9) eine senkrecht zur Richtung der Abtastzeilen, d.h. senkrecht zur Zeichenebene, gerichtete Vorschubbewegung über die Vorlage (2) aus. Der Abtastwagen (5) wird durch an dem Gehäuse (4) befestigten Linearführungen (13, 14) geführt. Die Vorschubbewegung des Abtastwagens (5) erfolgt beispielsweise mittels eines nicht dargestellten Vorschubmotors. Zur Abtastung von Aufsichtsvorlagen ist eine entsprechende Auflicht-Beleuchtungseinheit (15) an dem Grundträger (7) des Abtastwagens (5) angebracht.

Um einen besseren Zugang zu dem Vorlagenträger (1) zu bekommen, ist der Beleuchtungsträger (6) mit der Durchlicht-Beleuchtungseinheit (8) von dem Vorlagenträger (1) weg verschwenkbar angeordnet. Dazu weist das Verbindungselement (12) ein Drehgelenk (16) auf, dessen Drehachse sich in Vorschubrichtung des Abtastwagens (5) erstreckt.

Zwischen der Durchlicht-Beleuchtungseinheit (8) und der Vorlage (2) befindet sich eine Trennplatte (17), die beispielsweise wie der Vorlagenträger (1) aus einem transparenten Material besteht. Während der Vorschubbewegung stützt sich der

Beleuchtungsträger (6) mit der Durchlicht-Beleuchtungseinheit (8) mittels einer Rolle (19) auf der Trennplatte (17) ab.

Oberhalb der Durchlicht-Beleuchtungseinheit (8) weist das Gehäuse (4) einen aufklappbaren Gerätedeckel (18) auf. Beim Aufklappen des Gerätedeckels (18) wird mittels eines Koppefelements (20) gleichzeitig die Trennplatte (17) und der Beleuchtungsträger (6) mit der Durchlicht-Beleuchtungseinheit (8) aufgeklappt. Um eine Relativbewegung zwischen Gerätedeckel (18) und dem Beleuchtungsträger (6) zu vermeiden, fällt in zweckmäßiger Weise die nicht dargestellte Drehachse des Gerätedeckels (18) mit der Drehachse des Drehgelenks (16) zusammen.

In einer Umgebung des Drehgelenks (16) sind Randbereiche des Gerätedeckels (18) und des Gehäuses (4) des Flachbettscanners derart gerundet geformt, beispielsweise als Viertelkreisbogen, daß eine mit dem Gehäuse (4) überlappende Schwenkbewegung des Gerätedeckels (18) erreicht wird. Dadurch können Verletzungen eines Bedieners, beispielsweise Fingerquetschungen, vermieden werden.

Ebenfalls ist die Halterung (3) für den Vorlagenträger (1) in der Umgebung des Drehgelenkes (16) mit einem gerundeten Verlauf versehen, wodurch ein manueller Zugriff auf das Drehgelenk (16) in allen denkbaren Schwenkpositionen vermieden wird.

Die relative Zuordnung des Abtastorgans (9) und der Durchlicht-Beleuchtungseinheit (8) erfolgt vorzugsweise derart, daß bei der in Fig. 1 dargestellten Arbeitspositionen eine im wesentlichen parallele Anordnung von Abtastorgan (9) und Durchlicht-Beleuchtungseinheit (8) sowie eine Anordnung übereinander mit möglichst geringem Abstand erfolgt. Es kann hierdurch sowohl eine gleichmäßige Beleuchtung als auch eine hohe Ausnutzung der zur Verfügung stehenden Lichtintensität unterstützt werden.

Fig. 2 zeigt eine weitere Darstellung des Flachbettscanners im Querschnitt, in der gleichzeitig mit dem Gerätedeckel (18) die Trennplatte (17) und der Beleuchtungsträger (6) mit der Durchlicht-Beleuchtungseinheit (8) aufgeschwenkt sind. In der dargestellten Position ist der Vorlagenträger (1) leicht zugänglich, und die Vorlage (2) kann auf einfache Weise auf den Vorlagenträger (1) aufgelegt oder von diesem entfernt werden. Die gerundet konturierten Bereiche des Gehäuses (4) und des Gerätedeckels (18) sind schalenförmig übereinander geschoben. Zu erkennen ist außerdem, daß das Drehgelenk (16) auch in der aufgeschwenkten Position von der gerundeten Kontur der Halterung (3) abgedeckt ist.

Bei aufgeklapptem Gerätedeckel (18) ist es möglich, relativ dicke Aufsichtsvorlagen, beispielsweise Seiten eines Buches, auf den Vorlagenträger (1) aufzulegen und abzutasten. Bei dieser Arbeitsweise erfolgt die Beleuchtung ausschließlich mit der Auflicht-Beleuchtungseinheit (15).

## Patentansprüche

1. Vorrichtung zur punkt- und zeilenweisen Abtastung von Vorlagen, bestehend aus
- einem ortsfesten Vorlagenträger (1) für die Vorlage (2),
- einer oberhalb des Vorlagenträgers (1) angeordneten verschwenkbaren Beleuchtungseinrichtung (6, 8), welche sich in Zeilenrichtung über den Vorlagenträger (1) erstreckt, zur zeilenweisen Beleuchtung der Vorlage (2),
- einem unterhalb des Vorlagenträgers (1) angeordneten optoelektronischen Abtastorgan (9) zur Umwandlung des Abtastlicht in Bildsignale und
- einem die Beleuchtungseinrichtung (6, 8) und das Abtastorgan (9) tragenden Verbindungselement (12), welches zur flächenhaften Abtastung der Vorlage (1) eine Vorschubbewegung senkrecht zur Zeilenrichtung ausführt, **dadurch gekennzeichnet, daß**
- das Verbindungselement (12) an einer Längsseite des Vorlagenträgers (1) beweglich angeordnet ist,
- das Verbindungselement (12) ein Drehgelenk (16) mit einer in Längsrichtung des Vorlagenträgers (1) verlaufenden Drehachse aufweist, mit dem die Beleuchtungseinrichtung (6, 8) von dem Vorlagenträger (1) weg in eine zum Vorlagenträger (1) geneigte Ebene verschwenkbar ist.

2. Vorrichtung nach Anspruch 1, **dadurch gekennzeichnet, daß**
- die Beleuchtungseinrichtung (6, 8) aus einem an dem Verbindungselement (12) befestigten Beleuchtungsträger (6) und einer an dem Beleuchtungsträger (6) angebrachten Beleuchtungseinheit (8) besteht,
- das Abtastorgan (9) mittels eines Grundträgers (7) an dem Verbindungselement (12) befestigt ist und
- Beleuchtungsträger (6), Verbindungselement (12) und Grundträger (7) u-förmig zueinander angeordnet sind und sich um den Vorlagenträger (1) erstrecken.

3. Vorrichtung nach Anspruch 1 oder 2, **dadurch gekennzeichnet, daß** zwischen der Beleuchtungseinrichtung (6, 8) und dem Vorlagenträger (1) eine Trennplatte (17) angeordnet ist.

4. Vorrichtung nach mindestens einem der Ansprüche 1 bis 3, **dadurch gekennzeichnet, daß** die Beleuchtungseinrichtung (6, 8) auf einer Trennplatte (17) mittels einer Rolle (19) abgestützt wird.

5. Vorrichtung nach mindestens einem der Ansprüche 1 bis 4, **dadurch gekennzeichnet, daß**
- sich Beleuchtungseinrichtung (6, 8), Vorlagenträger (1) und Abtastorgan (9) in einem Gehäuse (4) befinden,
- oberhalb der Beleuchtungseinrichtung (6, 8) ein das Gehäuse (4) abdeckender Gerätedeckel (18) mit einer Drehachse vorgesehen ist, die im wesentlichen mit der Drehachse des Drehgelenks (16) des Verbindungselements (12) zusammenfällt und
- der Gerätedeckel (18) von dem Vorlagenträger (1) weg in eine zum Vorlagenträger (1) geneigte Ebene verschwenkbar ist.

6. Vorrichtung nach mindestens einem der Ansprüche 1 bis 5, **dadurch gekennzeichnet, daß** der Gerätedeckel (18) und die Beleuchtungseinrichtung (6, 8) gemeinsam mittels eines Koppelelementes (20) von dem Vorlagenträger (1) weg verschwenkbar sind.

7. Vorrichtung nach Anspruch 5 oder 6, **dadurch gekennzeichnet, daß** sich Gehäuse (4) und Gerätedeckel (18) im Bereich des Drehgelenks (16) überlappen und eine gerundete Kontur aufweisen.

8. Vorrichtung nach mindestens einem der Ansprüche 1 bis 7, **dadurch gekennzeichnet, daß** die Beleuchtungseinrichtung (6, 8) als Durchlicht-Beleuchtungseinheit zur Beleuchtung von Durchsichtsvorlagen ausgebildet ist.

9. Vorrichtung nach mindestens einem der Ansprüche 1 bis 8, **dadurch gekennzeichnet, daß** der Vorlagenträger (1) als Glasplatte ausgebildet ist.

10. Vorrichtung nach mindestens einem der Ansprüche 1 bis 9, **dadurch gekennzeichnet, daß** unterhalb des Vorlagenträgers (1) eine Auflicht-Beleuchtungseinheit (15) zur Beleuchtung von Aufsichtsvorlagen angeordnet ist.

11. Vorrichtung nach mindestens einem der Ansprüche 1 bis 10, **dadurch gekennzeichnet, daß** das Abtastorgan (9) ein Abtastobjektiv (10) und einen optoelektronischen Wandler (11) aufweist.

12. Vorrichtung nach Anspruch 11, **dadurch gekennzeichnet, daß** der optoelektronische Wandler (11) eine parallel zum Vorlagenträger (1) ausgerichtete Fotodioden-Zeile ist.

13. Vorrichtung nach mindestens einem der Ansprüche 1 bis 12, **dadurch gekennzeichnet, daß**
- Beleuchtungseinrichtung (6, 8), Abtastorgan (9) und Verbindungselement (12) einen Abtastwagen (5) bilden und
- der Abtastwagen (5) mittels Linearführungen (13, 14) in Vorschubrichtung verschiebbar ist.

14. Vorrichtung nach mindestens einem der Ansprüche 1 bis 13, **dadurch gekennzeichnet, daß** die Vorrichtung als Flachbettscanner ausgebildet ist.

## Claims

1. Apparatus for dot-by-dot and line-by-line scanning of copy, comprising
- a fixed copy carrier (1) for the copy (2),
- a pivotable illuminating device (6, 8) arranged above the copy carrier and extending over the copy carrier (1) in the line direction, for line-by-line illumination of the copy (2),
- an optoelectronic scanner module (9) arranged under the copy carrier (1), for converting scanned light into picture signals, and
- a connecting element (12) which carries the illuminating device (6, 8) and the scanner module (9), and executes an advance motion perpendicularly to the line direction for area scanning of the copy (1),
**characterized in that**
- the connecting element (12) is movably arranged on one longitudinal side of the copy carrier (1),
- the connecting element (12) has a hinge (16) with a pivot axis extending in the longitudinal direction of the copy carrier (1), by means of which the illuminating device (6, 8) is pivotable away from the copy carrier (1) into a plane inclined with respect to the copy carrier (1).

2. Apparatus according to Claim 1, **characterized in that**
- the illuminating device (6, 8) consists of a lamp carrier (6) attached to the connecting element (12) and a lamp unit (8) fitted to the lamp carrier (6),
- the scanner module (9) is attached to the connecting element (12) by means of a bottom carrier (7), and
- lamp carrier (6), connecting element (12) and bottom carrier (7) are arranged in a U shape with respect to each other, and extend around the copy carrier (1).

3. Apparatus according to Claim 1 or Claim 2, **characterized in that** a shield plate (17) is arranged between the illuminating device (6, 8) and the copy carrier (1).

4. Apparatus according to at least one of Claims 1 to 3, **characterized in that** the illuminating device (6, 8) is supported on a shield plate (17) by means of a roller (19).

5. Apparatus according to at least one of Claims 1 to 4, **characterized in that**
- illuminating device (6, 8), copy carrier (1) and scanner module (9) are located in a casing (4),
- a lid (18) covering the casing (4), with a pivot axis essentially coinciding with the pivot axis of the hinge (16) of the connecting element (12), is provided above the illuminating device (6, 8), and
- the lid (18) is pivotable away from the copy carrier (1) into a plane inclined with respect to the copy carrier (1).

6. Apparatus according to at least one of Claims 1 to 5, **characterized in that** the lid (18) and the illuminating device (6, 8) are pivotable together away from the copy carrier (1) by virtue of a coupling element (20).

7. Apparatus according to Claim 5 or Claim 6, **characterized in that** casing (4) and lid (18) overlap, and have a rounded contour, in the region of the hinge (16).

8. Apparatus according to at least one of Claims 1 to 7, **characterized in that** the illuminating device (6, 8) is configured as a transmitted-light illuminating device for illuminating transparent copy.

9. Apparatus according to at least one of Claims 1 to 8, **characterized in that** the copy carrier (1) is configured as a glass plate.

10. Apparatus according to at least one of Claims 1 to 9, **characterized in that** a reflected-light lamp unit (15) for illuminating opaque copy is arranged underneath the copy carrier (1).

11. Apparatus according to at least one of Claims 1 to 10, **characterized in that** the scanner module (9) has a scanning lens (10) and an optoelectronic converter (11).

12. Apparatus according to Claim 11, **characterized in that** the optoelectronic converter (11) is a row of photodiodes aligned parallel with the copy carrier (1).

13. Apparatus according to at least one of Claims 1 to 12, **characterized in that**
- illuminating device (6, 8), scanner module (9) and connecting element (12) form a scanning carriage (5), and
- the scanning carriage (5) is displaceable in the advance direction by means of linear guides (13, 14).

14. Apparatus according to at least one of Claims 1 to 13, **characterized in that** the apparatus is configured as a flatbed scanner.

## Revendications

1. Dispositif de balayage point par point et ligne par ligne de documents comprenant
- un support de document (1), fixe, pour recevoir le document (2),
- une installation d'éclairage (6, 8) basculante installée au-dessus du support de document (1), et qui s'étend dans la direction des lignes, par-dessus le support de document (1), pour éclairer le document (2), ligne par ligne,
- un organe de détection (9) optoélectronique installé sous le support de document (1) pour convertir la lumière de balayage en signaux d'images et
- un élément de liaison (12) qui porte l'installation d'éclairage (6, 8) et l'organe de détection (9), et qui effectue un mouvement de déplacement perpendiculaire à la direction des lignes pour le balayage surfacique du document (1),
**caractérisé en ce que**
- l'élément de liaison (12) est installé de manière mobile le long d'un grand côté du support de document (1),
- l'élément de liaison (12) comporte un pivot (16) d'axe dirigé dans la direction longitudinale du support de document (1), permettant de basculer l'installation d'éclairage (6, 8) pour l'écarter du support de document (1) et le mettre dans un plan incliné par rapport au support de document (1).

2. Dispositif selon la revendication 1,
**caractérisé en ce que**
- l'installation d'éclairage (6, 8) se compose d'un support d'éclairage (6) fixé à l'élément de liaison (12) et d'une unité d'éclairage (8) installée sur le support d'éclairage (6),
- l'organe de détection (9) est fixé à l'élément de liaison (12) à l'aide d'un support de base (7) et
- le support d'éclairage (6), l'élément de liaison (12) et le support de base (7) sont liés suivant une forme de U et entourent le support de document (1).

3. Dispositif selon l'une quelconque des revendications 1 ou 2,
**caractérisé par**
une plaque de séparation (17) installée entre l'installation d'éclairage (6, 8) et le support de document (1).

4. Dispositif selon l'une quelconque des revendications 1 à 3,
**caractérisé en ce que**
l'installation d'éclairage (6, 8) est appuyée sur une plaque de séparation (17) à l'aide d'un galet (19).

5. Dispositif selon l'une quelconque des revendications 1 à 4,
**caractérisé en ce que**
- l'installation d'éclairage (6, 8), le support de document (1) et l'organe de détection (9) sont logés dans un boîtier (4),
- au-dessus de l'installation d'éclairage (6, 8) il est prévu un couvercle (18) d'appareil, couvrant le boîtier (4) en étant monté sur un axe de rotation, cet axe correspondant pour l'essentiel à l'axe de rotation de l'articulation (16) de l'élément de liaison (12) et
- le couvercle (18) peut s'écarter du support de document (1) en pivotant dans un plan incliné par rapport au support de document (1).

6. Dispositif selon l'une quelconque des revendications 1 à 5,
**caractérisé en ce que**
le couvercle (18) de l'appareil et l'installation d'éclairage (6, 8) peuvent s'écarter par pivotement, en commun, à l'aide d'un élément de couplage (20) par rapport au support de document (1).

7. Dispositif selon l'une quelconque des revendications 5 ou 6,
**caractérisé en ce que**
le boîtier (4) et le couvercle d'appareil (18) se chevauchent au niveau de l'articulation (16) et ont un contour arrondi.

8. Dispositif selon l'une quelconque des revendications 1 à 7,
**caractérisé en ce que**
l'installation d'éclairage (6, 8) est réalisée sous la forme d'une unité d'éclairage par transparence pour éclairer des documents transparents.

9. Dispositif selon l'une quelconque des revendications 1 à 8,
**caractérisé en ce que**
le support de document (1) est constitué par une plaque en verre.

10. Dispositif selon l'une quelconque des revendications 1 à 9,
**caractérisé en ce qu'**
en dessous du support de document (1) il est prévu une unité d'éclairage (15) dirigée vers le haut pour éclairer des documents de contrôle.

11. Dispositif selon l'une quelconque des revendications 1 à 10,
**caractérisé en ce que**
l'organe de détection (9) comporte un objectif de détection (10) et un convertisseur optoélectronique (11).

12. Dispositif selon la revendication 11,
**caractérisé en ce que**
le convertisseur optoélectronique (11) est une ligne de photodiodes alignées parallèlement au support de document (1).

13. Dispositif selon l'une quelconque des revendications 1 à 12,
**caractérisé en ce que**
- l'installation d'éclairage (6, 8), l'organe de détection (9) et l'élément de liaison (12) forment un chariot de détection (5) et
- le chariot de détection (5) peut coulisser dans la direction d'avance par l'intermédiaire de guidages linéaires (13, 14).

14. Dispositif selon l'une quelconque des revendications 1 à 13,
**caractérisé en ce que**
le dispositif est un scanner à plat.
